# FASCICULE DE BREVET EUROPEEN

(11) **EP 0 489 766 B1**
(45) Date de publication et mention de la délivrance du brevet: **29.03.1995**
(21) Numéro de dépôt: 90912435.6
(22) Date de dépôt: 31.08.1990
(51) Int. Cl.: B01J 8/24, F23C 11/02

(54) **TRAITEMENT DE CHARBON ET UTILISATION D'UN APPAREIL DE REGULATION DU NIVEAU DU LIT D'UN FOUR A LIT FLUIDISE**
VERFAHREN ZUR KOHLENBEHANDLUNG UND VERWENDUNG EINER VORRICHTUNG ZUR STEUERUNG DER HÖHE DES BETTES EINES WIRBELSCHICHTREAKTORS
METHOD OF TREATING CARBON AND USE OF A DEVICE FOR ADJUSTING THE LEVEL OF THE BED IN A FLUIDISED BED KILN

(30) Priorité: 01.09.1989 BE 8900932
(43) Date de publication de la demande: 17.06.1992
(73) Titulaire: FINA RESEARCH S.A., B-7181 Feluy (BE)
(72) Inventeur: BICHE, René, F-35120 Dol-de-Bretagne (FR)
(86) Numéro de dépôt international: BE9000048
(87) Numéro de publication internationale: WO9103316

(56) Documents cités:
- EP-A- 0 162 599
- US-A- 4 078 675
- US-A- 4 167 819

## Description

La présente invention concerne un procédé de traitement de charbons par extraction de surface pour des fours à lit fluidisé. Plus particulièrement, l'invention concerne un procédé permettant de traiter des charbons dans un four à lit fluidisé par régulation du niveau du lit fluidisé. L'invention concerne également l'utilisation d'un appareil pour le traitement de charbons dans un four à lit fluidisé par régulation du niveau du lit fluidisé.

Dans un four à lit fluidisé, la vitesse du gaz assurant la fluidisation (en général de l'air ou un mélange d'air et de gaz de recyclage) est généralement suffisante pour permettre l'envolée des cendres parce que celles-ci sont suffisamment fines. Plus particulièrement, tant que l'on utilise des charbons dont la combustion produit moins qu'environ 20% de cendres, les particules de sable du lit sont capables d'abraser les cendres, ce qui permet à ces dernières d'être éliminées du lit.

Toutefois, il est à présent nécessaire de pouvoir utiliser des charbons à plus fortes teneurs en cendres, c'est-à-dire produisant plus de cendres. En effet, il existe d'importantes réserves de ces charbons. Il existe également d'importantes réserves de charbons à forte teneur en soufre; pour pouvoir brûler ces dernières en respectant les normes toujours plus sévères en matière de pollution atmosphérique par les oxydes de soufre, il importe de piéger ces derniers par de la chaux (qu'elle soit ajoutée ou même présente dans le minerai) qui forme du sulfate calcique en quantité d'autant plus importante qu'il y a beaucoup de soufre dans le charbon. Or ce sulfate calcique tend, lorsqu'il est produit en quantité importante dans le lit fluidisé, à se former en de trop grosses masses qui ne peuvent plus être abrasées et s'envoler du lit.

L'accumulation de cendres et/ou de sulfate calcique dans le lit ou, pour les plus grosses masses, à sa surface a pour conséquence que le niveau du lit s'élève, ce qui ne permet pas de garder une fluidisation et une combustion également constantes.

Il existe donc un besoin pour un procédé de traitement dans un four à lit fluidisé de charbons à forte teneur en cendres et/ou à forte teneur en soufre. Plus particulièrement, il existe un besoin pour un procédé de traitement dans un four à lit fluidisé de charbons à forte teneur en cendres et/ou à forte teneur en soufre par extraction de la fraction excédentaire de matériaux présents dans le lit.

Le brevet US 4,167,819 décrit un régulateur de pression à lit fluidisé. Le contrôle de la pression se fait par réglage de la hauteur du lit. Le brevet EP 162599 décrit un principe d'enrobage de particules dans un lit fluidisé à haute température. On y propose un système de récupération des particules enrobées dès qu'elles ont atteint une taille adéquate.

On a déjà proposé d'extraire des matériaux du lit par dessous, mais outre le danger d'extraire dans une zone de support de la pression de fluidisation, on observe des pertes de fluidisation, des cheminées d'extraction, des surchauffes des tubes au droit de l'extraction, voire même la vitrification locale du sable.

Le procédé de l'invention pour le traitement dans un four à lit fluidisé de charbons à forte teneur en cendres et/ou à forte teneur en soufre est caractérisé en ce que l'on extrait l'excédent de matériaux présent dans le lit par un conduit adapté à l'écoulement de l'excédent de matériaux, le point d'extraction dans le lit fluidisé étant situé à la hauteur désirée pour le lit, et l'extraction étant commandée par un joint pneumatique capable d'obturer le conduit.

Selon un mode d'exécution de l'invention, le procédé comprend également la récupération et le refroidissement de l'excédent de matériaux.

Selon un autre mode d'exécution de l'invention, le procédé comprend également (i) la récupération de l'excédent de matériaux, (ii) le refroidissement de cet excédent, (iii) le concassage des plus grosses particules, et (iv) le recyclage dans le lit fluidisé de tout ou partie des particules concassées.

Selon un troisième mode d'exécution de l'invention, le concassage peut être remplacé par un tamisage avant recyclage de tout ou partie des particules le plus fines.

L'appareil à utiliser selon l'invention pour le traitement dans un four à lit fluidisé de charbons à forte teneur en cendres et/ou à forte teneur en soufre par extraction de l'excédent de matériaux présent dans le lit comprend un conduit incliné dont l'extrémité supérieure est soudée à la paroi interne du four à la hauteur désirée pour le lit, et un moyen de créer un joint pneumatique dans le conduit par intermittence.

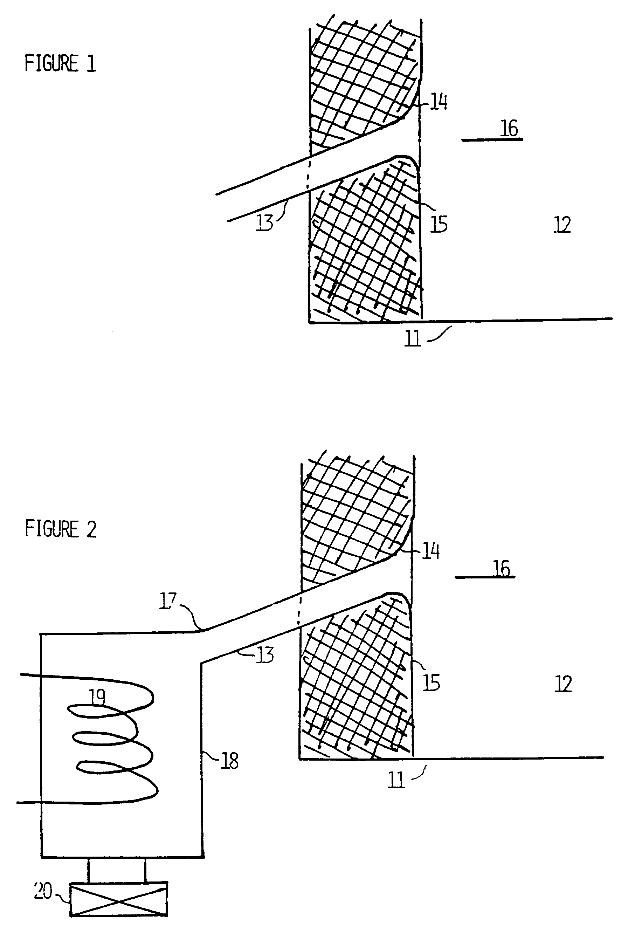

L'invention sera également décrite à l'aide des FIGURES 1 et 2 qui représentent deux modes d'exécution particulier de l'invention.

Sur la FIGURE 1, on a représenté une partie d'un four (11) à lit fluidisé (12). Un conduit incliné (13) est fixé par son extrémité supérieure (14) à la paroi interne (15) du four (11) à la hauteur désirée (16) pour le lit (12). Lorsque le niveau du lit fluidisé (12) s'élève dans le four (11) au-dessus du niveau désiré (16), l'excédent s'écoule par gravité dans le conduit (13). Lorsque l'on désire arrêter cet écoulement, un moyen (non représenté) permet de créer un joint pneumatique dans le conduit (13); dès que l'on supprime ce joint, l'écoulement de l'excédent peut reprendre.

La FIGURE 2 représente un autre mode d'exécution de l'invention, dans lequel le dispositif représenté à la FIGURE 1 est complèté par un récipient (18) auquel est reliée l'extrémité inférieure (17) du conduit (13). Ce récipient (18) récupère l'excédent de matériaux s'écoulant du lit (12) dans le conduit (13). Pour assurer un refroidissement suffisamment rapide de ces matériaux, il est généralement nécessaire de pourvoir le récipient (18) d'un dispositif de refroidissement (19). A sa partie inférieure, le récipient (18) est muni d'une vanne (20). Lorsque le récipient (18) est pratiquement rempli, on crée un joint pneumatique dans le conduit (13) pour arrêter temporairement l'écoulement de l'excédent de matériaux du lit (12). Dès que le refroidissement des matériaux dans le récipient (18) est suffisant, on ouvre la vanne (20) et on récupère ces matériaux. Après fermeture de la vanne (20), on supprime le joint pneumatique dans le conduit (13), ce qui permet à l'écoulement de l'excédent de reprendre.

Dans tous les modes d'exécution, le joint pneumatique peut être créé à l'aide d'un fluide gazeux généralement quelconque; toutefois, on utilise le plus souvent du gaz de recyclage, de l'air, ou un mélange de ceux-ci.

Il n'est pas nécessaire de récupérer l'excédent de matériaux. Selon un mode d'exécution, on concasse les plus grosses particules, en veillant à ne pas broyer le sable, et on recycle le mélange, en tout ou en partie, dans le four. Selon un autre mode d'exécution, on enlève les plus grosses particules par tamisage, et on recycle tout ou partie des particules les plus fines. Le plus souvent, et pour des raisons de facilité, les particules recyclées sont réintroduites dans le four avec le combustible et selon les mêmes modalités. les cendres recyclées sont, soit suffisamment fines pour s'envoler, soir réextraites ultérieurement.

Le procédé et l'utilisation de l'appareil selon l'invention sont particulièrement appropriés pour le traitement dans les fours à lit fluidisé de charbons à haute teneur en soufre, comme le charbon de Gardanne qui en contient de l'ordre de 4 à 5%. Le charbon de Gardanne, dont il existe d'importantes réserves sous forme de veines épaisses et plates, contient environ 20% de cendres essentiellement calcaires; lors de la combustion, le calcaire se transforme en chaux qui réagit avec les oxydes de soufre pour donner finalement du sulfate de calcium ou gypse en morceaux d'une taille pouvant atteindre 20mm. Avec un tel charbon, les normes en matière de pollution atmosphériques sont respectées en ce qui concerne les oxydes de soufre, avec l'inconvénient qu'il ne serait pas possible d'utiliser un four à lit fluidisé, puisque le niveau du lit fluidisé s'élève suite à la teneur et à la nature des cendres, sans le procédé et l'appareil de l'invention. Avec d'autres charbons à haute teneur en soufre qui ne contiennent pas suffisamment de calcaire pour que les oxydes de soufre formés soient suffisamment piégés par réaction avec la chaux produite, on est généralement amené à ajouter du calcaire ou de la chaux pour respecter les normes en matière de pollution atmosphérique par les oxydes de soufre; il n'apparaitrait donc pas non plus possible d'utiliser ces charbons dans un four à lit fluidisé sans le procédé et l'usage de l'invention.

## Revendications

1. Procédé de traitement dans un lit fluidisé de charbons à forte teneur en cendres et/ou à forte teneur en soufre caractérisé en ce que l'on extrait l'excédent de matériaux présent dans le lit par un conduit adapté à l'écoulement de l'excédent de matériaux, le point d'extraction dans le lit fluidisé étant situé à la hauteur désirée dans le lit, et l'extraction étant commandée par un joint pneumatique capable d'obturer le conduit.

2. Procédé selon revendication 1, caractérisé en ce qu'il comprend également la récupération et le refroidissement de l'excédent de matériaux.

3. Procédé selon la revendication 1, caractérisé en ce qu'il comprend également (i) la récupération de l'excédent de matériaux, (ii) le refroidissement de cet excédent, (iii) le concassage des plus grosses particules, et (iv) le recyclage dans le lit fluidisé de tout ou partie des particules concassées.

4. Procédé selon la revendication 1, caractérisé en ce qu'il comprend également (i) la récupération de l'excédent de matériaux, (ii) le refroidissement de cet excédent, (iii) l'enlèvement des plus grosses particules par tamisage, et (iv) le recyclage dans le lit fluidisé de tout ou partie des particules les plus fines.

5. Utilisation d'un appareil pour le traitement dans un four (11) à lit fluidisé (12) de charbons à forte teneur en cendres et/ou à forte teneur en soufre par extraction de l'excédent de matériaux présent dans le lit (12) comprenant un conduit incliné (13) dont l'extrémité supérieure (14) est soudée à la paroi interne (15) du four (11) à la hauteur désirée (16) pour le lit (12), et un moyen de créer un joint pneumatique dans le conduit (13) par intermittence.

6. Utilisation selon la revendication 5 d'un appareil, dans lequel l'extrémité inférieure (17) du conduit (13) est reliée à un récipient (18) pour la récupération de l'excédent de matériaux, ce récipient (18) comportant (i) un moyen de refroidissement (19) de l'excédent de matériaux et (ii) une vanne (20) dans sa partie la plus basse.

## Claims

1. A method of treatment in a fluidized bed of coals having a high ash content and/or a high sulphur content, characterized in that the excess material present in the bed is extracted via a conduit adapted to the flow of said excess material, the extraction point in the fluidized bed being at the desired height for the bed, and extraction being controlled by a pneumatic seal adapted to close the said conduit.

2. A process according to claim 1, characterized in that it also comprises the retrieval and cooling of the excess material.

3. A process according to claim 1, characterized in that it also comprises (i) the retrieval of the excess material, (ii) the cooling of said excess material, (iii) the crushing of the coarsest particles, and (iv) the recycling in the fluidized bed of all or part of the crushed particle.

4. A process according to claim 1, characterized in that it also comprises (i) the retrieval of the excess material, (ii) the cooling of said excess, (iii) the removal of the coarsest particles by sifting, and (iv) the recycling in the fluidized bed of all or part of the finest particles.

5. Use of a device for the treatment in a kiln (11) with a fluidized bed (12) of coals having a high ash content and/or a high sulphur content by the extraction of the excess material present in the bed (12), comprising an inclined conduit (13) whose upper end (14) is welded to the inside wall (15) of the kiln (11) at the required height (16) for the bed (12), and a means for intermittently creating a pneumatic seal in the conduit (13).

6. Use of a device according to claim 5, wherein the lower end (17) of the conduit (13) is connected to a receptacle (18) for the retrieval of the excess material, said receptacle (18) comprising (i) a means (19) for cooling the excess material and (ii) a valve (20).

## Patentansprüche

1. Verfahren zur Verarbeitung von Kohle mit hohem Aschegehalt und/oder hohem Schwefelgehalt in einem Fließbett, dadurch gekennzeichnet, daß ein Überschuß von sich in dem Bett befindlichen Materialien über eine Leitung, die für den Materialüberschußabfluß ausgebildet ist, extrahiert wird, wobei der Extraktionspunkt in dem Fließbett in der in dem Bett gewünschten Höhe angeordnet ist und die Extraktion durch einen pneumatischen Verschluß gesteuert wird, der zum Verschließen der Leitung geeignet ist.

2. Verfahren nach Anspruch 1, dadurch gekennzeichnet, daß es auch die Wiedergewinnung und Abkühlung des Materialüberschusses umfaßt.

3. Verfahren nach Anspruch 1, dadurch gekennzeichnet, daß es auch (i) die Wiedergewinnung des Materialüberschusses, (ii) die Abkühlung dieses Überschusses, (iii) die Verkleinerung der gröberen Partikel und (iv) die Rückführung von allen oder Teilen der zerkleinerten Partikel in das Fließbett umfaßt.

4. Verfahren nach Anspruch 1, dadurch gekennzeichnet, daß es auch (i) die Wiedergewinnung des Materialüberschusses, (ii) die Abkühlung dieses Überschusses, (iii) Beseitigung der gröberen Partikel durch Sieben und (iv) die Rückführung von allen oder Teilen der feinsten Partikel in das Fließbett umfaßt.

5. Verwendung einer Vorrichtung zur Verarbeitung von Kohle mit hohem Aschegehalt und/oder hohem Schwefelgehalt in einem Ofen (11) mit Fließbett (12) durch Extraktion des Überschusses von sich in dem Bett (12) befindlichen Materialien, wobei die Vorrichtung eine geneigte Leitung (13) hat, deren oberes Ende (14) an die innere Wand (15) des Ofens (11) in der für das Bett (12) gewünschten Höhe (16) angeschweißt ist, und eine Einrichtung zum Erzeugen eines pneumatischen Verschlusses in der Leitung (13) mit Unterbrechungen.

6. Verwendung nach Anspruch 5 einer Vorrichtung, in der das untere Ende (17) der Leitung (13) mit einem Behälter (18) zur Wiedergewinnung des Materialüberschusses verbunden ist, wobei der Behälter (18) (i) eine Abkühlungseinrichtung (19) für den Materialüberschuß und (ii) ein Absperrorgan (20) in seinem untersten Teil umfaßt.
